# DEMANDE DE BREVET EUROPEEN

(11) **EP 1 070 631 A2**
(43) Date de publication de la demande: **24.01.2001**
(21) Numéro de dépôt: 00402029.3
(22) Date de dépôt: 17.07.2000
(51) Int. Cl.: B60P 3/38, B60P 3/36

(54) **Banquette-lit pour caravane à accoudoir coulissable**

(30) Priorité: 19.07.1999 FR 9909353
(71) Demandeur: Rapido, 53100 Mayenne (FR)
(72) Inventeur: Rousseau, Pierre, 53100 Mayenne (FR)
(74) Mandataire: Texier, Christian

(57) **Abrégé**

L'invention concerne un ensemble formant banquette et lit pour une habitation mobile telle qu'une caravane, comprenant une assise (100), un dossier (200) et un accoudoir (400), caractérisé en ce que l'accoudoir est porté par un support (500, 600) qui peut coulisser latéralement pour écarter l'accoudoir de l'assise (100), en ce qu'une pièce complémentaire (700) est prévue pour remplir l'espace ainsi créé entre l'assise (100) et le support en complétant l'assise et en ce que le dossier (200) est basculable en prolongement de l'assise (100), la pièce complémentaire (700) présentant une forme allongée de longueur suffisante pour border l'ensemble assise 100/dossier 200 en positon déployée.

## Description

L'invention concerne les aménagements formant à la fois banquette et lit destinés aux habitations transportables telles que les caravanes.

Les banquettes-lits proposées jusqu'à présent sont souvent complexes d'utilisation, coûteuses de réalisation et résistent mal à une utilisation intensive.

L'invention se propose de résoudre ces inconvénients en proposant un ensemble formant banquette et lit pour une habitation mobile telle qu'une caravane, comprenant une assise, un dossier et un accoudoir, caractérisé en ce que l'accoudoir est porté par un support qui peut coulisser latéralement pour écarter l'accoudoir de l'assise, en ce qu'une pièce complémentaire est prévue pour remplir l'espace ainsi créé entre l'assise et le support en complétant l'assise, et en ce le dossier est basculable en prolongement de l'assise, la pièce complémentaire présentant une forme allongée de longueur suffisante pour border l'ensemble assise /dossier en positon déployée.

La banquette est ainsi facile à transformer en lit par déplacement de l'accoudoir, basculement du dossier et mise en place de la pièce complémentaire.

D'autres caractéristiques, buts et avantages de l'invention apparaîtront à la lecture de la description détaillée qui va suivre, faite en référence aux figures annexées sur lesquelles :
- les figures 1 à 4 représentent un ensemble selon l'invention, dans quatre étapes successives de transformation de la position banquette à la position lit.
- la figure 5 est une vue éclatée d'un socle et d'une structure de maintien d'accoudoir de banquette lit selon l'invention.

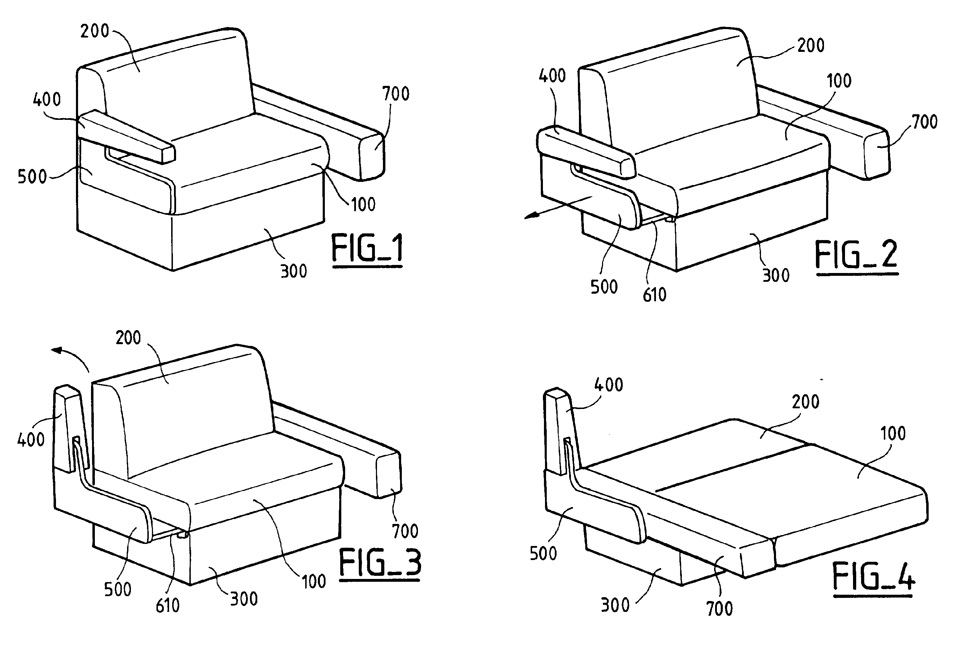

La banquette représentée sur les figures 1 à 4 présente une assise 100 et un dossier 200 posés sur un socle 300. Le dossier et l'assise 100 sont réunis par une fixation à charnière prévue coulissante horizontalement sur le socle pour permettre de coucher le dossier 200 en tirant l'assise 100 vers l'avant, de sorte que la charnière entre ces deux éléments se déplace en jusqu'à venir se positionner au centre du socle 300 en position lit. Dans cette position représentée à la figure 4, l'assise 100 et le dossier 200 se trouvent alignés pour former ensemble un matelas de couchage.

Cette banquette présente également un accoudoir 400 monté pivotable au sommet d'un plateau vertical 500 en L. Les deux branches de ce plateau en L sont toutes deux formées par une même plaque en bois et bordent l'assise 100 et le dossier 200. La plaque 500 est fixée par sa face intérieure sur une broche métallique en U dont la base forme une palque 610 fixée contre la plaque 500. Les deux branches de ce U sont formées par deux tiges 610 et 620 embrochées dans le socle 300 à la façon d'une prise électrique.

Le socle 300 est constitué par un assemblage de douze barres métalliques assemblées entre elles de manière à former les arêtes d'un cube, ce cube étant ici recouvert sur ses quatre côtés verticaux par des plaques en bois.

Les branches 610 et 620 sont ainsi enfilées dans deux barres tubulaires formant deux arêtes horizontales supérieures opposées de la structure en forme générale de cube.

L'ensemble formé de la broche métallique 600 et de la plaque en L 500 est donc monté à coulissement sur le socle 300, à la façon d'un tiroir entre une position où la plaque en L vient s'appliquer contre les côtés à la fois de l'assise 100 et du dossier 200, et en position écartée où elle forme un espace entre la plaque 500 et l'assise, le fond de cet espace étant constitué par les deux barres 610 et 620.

Tel qu'illustré sur les figures 1 à 3, la banquette présente un troisième élément matelassé 700 placé sur le côté de la banquette qui est opposé à celui précédemment décrit.

Cet élément est maintenu entre le côté de l'assise 100 et un mur latéral à l'assise. Il forme ici un deuxième accoudoir du côté opposé de celui portant l'accoudoir décrit précédemment.

Ce coussin présente une forme allongée de longueur sensiblement égale à la longueur totalisée par la profondeur de l'assise 100 et la hauteur du dossier 200.

La transformation de cet ensemble pour passer de l'état de banquette à l'état de lit est effectuée de la façon suivante : dans un premier temps, la plaque en L 500 est écartée latéralement de la banquette. L'accoudoir 400 est ensuite relevé en position verticale. Le dossier 200 est ensuite déployé dans l'alignement de l'assise 100 et la charnière entre le dossier 200 et l'assise 100 tirée au centre du socle 300. Le centre du lit se situe alors au niveau de la plaque en L 500. Les deux branches 610 et 620 se trouvent donc, dans cette position, au niveau du centre du lit. Il existe entre la plaque 500 et le bord latéral de la banquette un espacement égal à la hauteur de la pièce formant accoudoir 700. Dans une dernière étape, cette dernière pièce 700 est désengagée de sa position d'accoudoir puis placée sur les branches 610 et 620, de manière à combler l'espacement entre la plaque 500 et le couple assise/dossier 100 et 200.

Les trois éléments 100, 200 et 700 forment alors une même surface de couchage rectangulaire.

Avantageusement, la pièce matelassée 700 est munie d'une structure rigide la rendant indéformable en flexion de part et d'autre des branches 610 et 620.

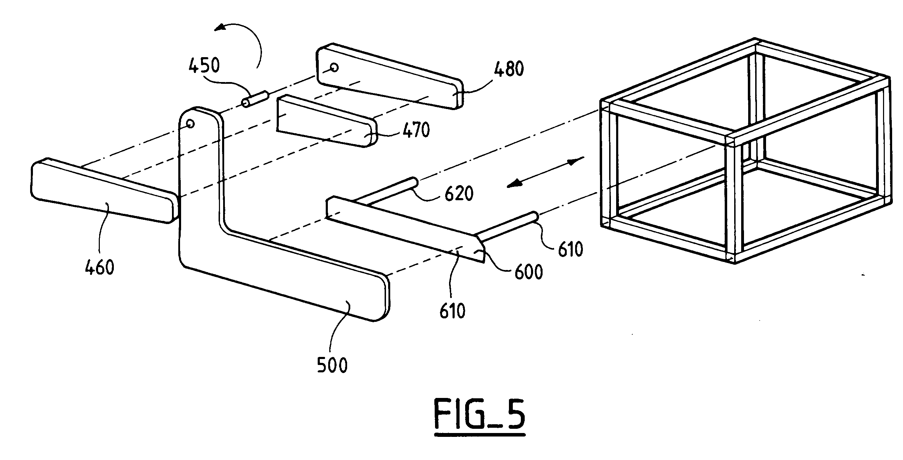

Comme représenté à la figure 5, l'accoudoir 400 présente une forme générale parallépipédique dont une entaille traversante reçoit le sommet de la branche verticale du L formé par la plaque 500.

Une cheville 450 traverse un orifice réalisé au niveau du sommet de cette plaque 500, les deux extrémités de la cheville étant reçues dans des cavités réalisées dans les faces intérieures de la fente de l'accoudoir.

Pour former l'accoudoir 400, on utilise avantageusement trois plaques 460, 470 et 480 dont une, prise en sandwich entre les deux autres, et de longueur plus faible pour laisser un espacement formant ladite entaille dans le prolongement de la plaque 470 la plus courte, entre les deux plaques latérales 460 et 480.

La cheville 450 est prise en sandwich entre les deux plaques 460 et 480 simultanément avec le bras vertical du L de la plaque 500, au moment du montage de l'accoudoir 400 sur la plaque 500.

## Revendications

1. Ensemble formant banquette et lit pour une habitation mobile telle qu'une caravane, comprenant une assise (100), un dossier (200) et un accoudoir (400), caractérisé en ce que l'accoudoir est porté par un support (500, 600) qui peut coulisser latéralement pour écarter l'accoudoir de l'assise (100), en ce qu'une pièce complémentaire (700) est prévue pour remplir l'espace ainsi créé entre l'assise (100) et le support en complétant l'assise, et en ce que le dossier (200) est basculable en prolongement de l'assise (100), la pièce complémentaire (700) présentant une forme allongée de longueur suffisante pour border l'ensemble assise 100/dossier 200 en position déployée.

2. Ensemble selon la revendication 1, caractérisé en ce que l'accoudoir (400) est monté pivotant sur le support coulissant (500, 600) pour pouvoir être rabattu vers le haut.

3. Ensemble selon l'une des revendications 1 ou 2, caractérisé en ce que la pièce complémentaire (700) constitue un accoudoir amovible monté du côté de la banquette qui est opposé à l'accoudoir (400) porté par le support coulissant (500, 600).

4. Ensemble selon l'une des revendications précédentes, caractérisé en ce que le support coulissant (500, 600) forme un plateau vertical (500) apte à border l'assise (100) en position banquette et à border la pièce complémentaire (700) en position lit.

5. Ensemble selon l'une des revendications précédentes, caractérisé en ce que le support coulissant (500, 600) comporte des barres (610, 670) engagées à coulissement sous l'assise (100).

6. Ensemble selon l'une des revendications précédentes, caractérisé en ce que le support coulissant (500, 600) comporte un montant vertical (500) bordant le dossier (200) et en ce que l'accoudoir (400) présente une cavité dans laquelle est fixé le sommet du montant (500) avec liberté de rotation mutuelle.

7. Ensemble selon la revendication 6, caractérisé en ce que l'accoudoir (400) est formé de trois plaques (460, 470, 480) fixées les unes contre les autres, dont la plaque centrale (470) est plus courte que les deux plaques latérales (460, 480) pour former ladite cavité entre les deux plaques latérales (460, 480) dans le prolongement de la plaque centrale (470).
